# EUROPEAN PATENT SPECIFICATION

(11) **EP 4 098 756 B1**
(45) Date of publication and mention of the grant of the patent: **09.07.2025**
(21) Application number: 21748377.5
(22) Date of filing: 28.01.2021
(51) Int. Cl.: C03C 3/087, C03C 8/16, C21D 1/70, C21D 1/68, C22C 38/18

(54) **ANTIOXIDANT AGENT FOR HEATING ALLOY MATERIAL, AND HEATING METHOD FOR ALLOY MATERIAL USING THE SAME**
ANTIOXIDATIONSMITTEL ZUM ERHITZEN VON LEGIERUNGSMATERIAL UND VERFAHREN ZUM ERHITZEN VON LEGIERUNGSMATERIAL UNTER VERWENDUNG DESSELBEN
ANTIOXYDANT POUR LE CHAUFFAGE D'UN MATÉRIAU D'ALLIAGE ET MÉTHODE DE CHAUFFAGE D'UN MATÉRIAU D'ALLIAGE UTILISANT CELUI-CI

(30) Priority: 31.01.2020 JP 2020015660
(43) Date of publication of application: 07.12.2022
(73) Proprietor: NIPPON STEEL CORPORATION, Chiyoda-ku Tokyo 100-8071 (JP)
(72) Inventor: HAYASHI, Kosuke, Tokyo 100-8071 (JP); HIDAKA, Yasuyoshi, Tokyo 100-8071 (JP); KONDO, Yasumitsu, Tokyo 100-8071 (JP); FUJITA, Aya, Tokyo 100-8071 (JP); MIYAMOTO, Seiji, Tokyo 100-8071 (JP); KAGARI, Takayoshi, Tokyo 100-8071 (JP); NOHARA, Wataru, Handa-shi, Aichi 475-0823 (JP)
(74) Representative: Zimmermann & Partner Patentanwälte mbB
(86) International application number: PCT/JP2021/002990
(87) International publication number: WO 2021/153657

(56) References cited:
- JP-A- 2001 207 217
- JP-A- 2004 507 424
- JP-A- 2007 314 875
- JP-A- H02 209 420
- JP-A- S5 280 228
- JP-A- S5 280 228
- JP-A- S57 149 419
- JP-A- S6 395 140
- JP-B2- 3 371 142
- US-A1- 2008 233 295
- US-B1- 6 423 415

## Description

### TECHNICAL FIELD

The present invention relates to an antioxidant agent for heating an alloy material, and a heating method for an alloy material using the same.

### BACKGROUND ART

As an alloy material, for example, an alloy material containing Cr is known. The alloy material is produced by the following process. At first, molten steel is produced. The molten steel is cast to obtain a cast material (slab, bloom, ingot). The cast material is heated. The heated cast material is hot-worked. An intermediate material obtained by hot working is shaped by cold-working or the like as necessary.

As described above, the alloy material is heated before hot working. The alloy material produces a passive coating on a surface during heating before hot working. The passive coating is a coating mainly containing chromia (Cr₂O₃). Hereinafter, the coating mainly containing chromia (Cr₂O₃) will also be referred to as a Cr₂O₃ coating.

The Cr₂O₃ coating suppresses oxidation of the alloy material. However, in heating before hot working, the alloy material may be heated at a high temperature of 1000°C or more, for example. When the alloy material is heated at a high temperature of 1000°C or more, scales mainly containing Fe are easily produced on the surface of the alloy material instead of Cr₂O₃ coating. If the scales mainly containing Fe are produced on the surface of the alloy material, by subsequent hot working, flaws attributable to the scales mainly containing Fe may occur on the surface of the alloy material. Therefore, oxidation of the alloy material is desirably suppressed even when heating is performed at a high temperature before hot working.

The techniques of suppressing oxidation of alloy materials are disclosed in, for example, Japanese Patent Application Publication No. 2007-314875 (Patent Literature 1), Japanese Patent Application Publication No. 2-209420 (Patent Literature 2), Japanese Patent Application Publication No. 3-291325 (Patent Literature 3), Japanese Patent Application Publication No. 56-026603 (Patent Literature 4), Japanese Patent Application Publication No. 4-072019 (Patent Literature 5), Japanese Patent Application Publication No. 4-072011 (Patent Literature 6), Japanese Patent Application Publication No. 6-158153 (Patent Literature 7), Japanese Patent Application Publication No. 7-062429 (Patent Literature 8) and Japanese Patent Application Publication No. 6-198310 (Patent Literature 9).

Patent Literatures 1 to 9 each discloses the technique that suppresses oxidation of an alloy material by using an antioxidant agent. Patent Literatures 1 to 3 assume heating for a short time with treatment times of about 20 minutes to 4 hours. Patent Literature 4 does not cover the heating time before hot working. Patent Literatures 5 to 8 cover alloy materials after working.

Specifically, Patent Literature 1 assumes heat treatment with a treatment time of about 20 minutes. An antioxidant agent composition of Patent Literature 1 contains a plurality of glass frits with different softening points. Thereby, the antioxidant agent composition maintains proper viscosity according to different temperature ranges, and the antioxidant agent composition is held on the steel surface. Patent Literature 1 indicates that as the result, in the heat treatment, production of scales is suppressed.

Patent Literature 2 assumes heat treatment with a treatment time of about one hour. An antioxidant agent for high temperature of Patent Literature 2 contains a glass component with a softening point of 1000°C or less, and consists of a glass composition with a viscosity as a whole at a temperature of 1200°C being 10³ poises or more. Patent Literature 2 indicates that thereby, the glass composition can be maintained on the steel surface, and formation of scales is suppressed at the time of heat treatment at a high temperature.

Patent Literature 3 assumes heat treatment with a treatment time of about 4 hours. A high-temperature oxidation prevention method for a metallic material in Patent Literature 3 is characterized by coating a steel material heating antioxidant agent consisting of 50 to 95% by weight of a glass component and 5 to 50% by weight of an aggregate to a thickness of 50 to 500 µm prior to heating, when heating and rolling the metallic material. Patent Literature 3 indicates that thereby, even if the metallic material is heated to 900 to 1300°C in an oxidizing atmosphere, outer layer oxidation can be prevented.

In Patent Literature 4, a surface of a cast piece is coated with an antioxidant agent, and a part or all parts of the surface is covered with a steel sheet to be heated. Patent Literature 4 indicates that this suppresses intergranular oxidation.

Patent Literature 5 to Patent Literature 8 proposes a technique of suppressing scales to an alloy processing material in annealing treatment after hot rolling and/or cold rolling. Patent Literature 5 to Patent Literature 8 are considered to assume heat treatment with a treatment time of about one hour. Patent Literature 5 to Patent Literature 8 use worked steel materials as objects to be heat-treated.

A pipe-making method of a seamless stainless pipe in Patent Literature 9 heats a starting material of an iron-based alloy containing 12 wt% or more of chrome to a predetermined temperature, feeds the starting material to a next rolling machine to apply predetermined rolling, wherein an outer surface of the starting material is coated with an antioxidant agent before heating, and the antioxidant agent is removed before start of rolling by the rolling machine. Patent Literature 9 indicates that this prevents production of a scale as a high-temperature oxide.

Patent Literature 10 discloses that, in a heat treatment process for rolling a continuously cast slab, the cut end face of the continuously cast slab is coated with flux whose component is adjusted so that the same phase ratio in the heat treatment temperature range becomes a solid-liquid coexisting phase region of 10-70%, and the cut end face is protected. In the method for preventing the central porous defect of the continuously cast slab, the penetration of oxygen in the atmospheric gas in the heating furnace into the porous layer at the central part of the slab is suppressed and the oxidation of the porous layer is prevented.

### CITATION LIST

### PATENT LITERATURE

Patent Literature 1: Japanese Patent Application Publication No. 2007-314875
Patent Literature 2: Japanese Patent Application Publication No. 2-209420
Patent Literature 3: Japanese Patent Application Publication No. 3-291325
Patent Literature 4: Japanese Patent Application Publication No. 56-026603
Patent Literature 5: Japanese Patent Application Publication No. 4-072019
Patent Literature 6: Japanese Patent Application Publication No. 4-072011
Patent Literature 7: Japanese Patent Application Publication No. 6-158153
Patent Literature 8: Japanese Patent Application Publication No. 7-062429
Patent Literature 9: Japanese Patent Application Publication No. 6-198310
Patent Literature 10: JP S52 80228 A

### SUMMARY OF INVENTION

### TECHNICAL PROBLEM

When heating the alloy material, a batch type reheating furnace may be used. In the batch type reheating furnace, the alloy materials are heated in a state stacked up and down. After heating is completed, the alloy materials are extracted one by one from the reheating furnace by transport means such as a crane. Specifically, a ceiling of the reheating furnace is opened. Subsequently, of a plurality of alloy materials stacked in the reheating furnace, the alloy material disposed on an uppermost position is grasped by the transport means such as a crane, the grasped alloy material is pulled up from the reheating furnace, and is extracted from the reheating furnace. The extracted alloy material is disposed on a transport path leading to a hot working device such as a rolling device.

When a plurality of alloys are exposed under a high temperature environment in the state stacked up and down in a batch type reheating furnace, the alloy materials that are stacked up and down may adhere to each other by antioxidant agent on the surfaces. If the alloy materials adhere to each other, it may be difficult to extract the alloy materials separately from the reheating furnace. In the present description, it is called blocking that the alloy materials adhere to each other so that it is difficult to extract the alloy materials separately from the reheating furnace. When blocking occurs, extracting work of the alloy materials from the reheating furnace is remarkably complicated, and workability is remarkably reduced. Therefore, the antioxidant agent is required to have excellent blocking resistance.

However, Patent Literature 1 to Patent Literature 9 do not describe adhesion of the alloy materials. In other words, Patent Literature 1 to Patent Literature 9 do not even consider blocking.

On the other hand, the alloy material contains a large amount of alloying elements. Therefore, segregation tends to occur in the alloy material. If heating is carried out at a high temperature for a long time, diffusion of the alloying elements advances, and segregation is reduced. Consequently, for the alloy materials, heating may be carried out at a high temperature for a long time. Specifically, before hot working, hold at a temperature of 1000 to 1350°C for 15 to 50 hours, in particular, for 25 hours or more may be carried out.

However, when high-temperature long-time hold such as hold at a temperature of 1000 to 1350°C for 15 hours to 50 hours is carried out, scales are excessively produced on the alloy material surface. Excessive scales reduce a yield of the alloy materials. Accordingly, even when high-temperature long-time hold is carried out to the alloy material, production of scales is preferably suppressed. Therefore, the antioxidant agent is required to have excellent oxidation resistance even when heating is performed at a high temperature for a long time.

Patent Literature 1 to Patent Literature 9 do not mainly aim at high-temperature long-time heating for the purpose of reducing segregation of alloy materials. Therefore, when the antioxidant agents disclosed in Patent Literature 1 to Patent Literature 9 are applied to the high-temperature long-time heating (hold) of the alloy materials described above, production of scales is sometimes unable to be suppressed sufficiently.

An object of the present invention is to provide an antioxidant agent for heating an alloy material excellent in blocking resistance, and excellent in oxidation resistance even when high-temperature long-time heating is performed, and a heating method for an alloy material that can suppress blocking, and can suppress oxidation of the alloy material even when high-temperature long-time heating is performed.

### SOLUTION TO PROBLEM

An antioxidant agent for heating an alloy material of the present disclosure consists of,
in mass%, when converted into oxides,
SiO₂: 40.0 to 80.0%,
Al₂O₃: 0 to 30.0%,
MgO: 0 to 5.0%,
10.00 to 50.00% in total of one kind or more selected from a group consisting of Na₂O: 9.0% or less, K₂O: 20.00% or less, and CaO: 25.0% or less, and
B₂O₃: 0 to less than 0.5%,
the balance being impurities, and satisfies Formula (1):

   (2SiO₂ + Al₂O₃) / (0.1MgO + 0.2B₂O₃ + 6Na₂O + 1.4K₂O + 2CaO) ≤ 2.50 (1)
where a content in mass% of a corresponding component is substituted for each chemical formula in Formula (1).

A heating method for an alloy material of the present disclosure includes
a step of coating a surface of an alloy material with the antioxidant agent for heating an alloy material described above, and
a step of heating the alloy material coated with the antioxidant agent for heating an alloy material.

### ADVANTAGEOUS EFFECTS OF INVENTION

The antioxidant agent for heating an alloy material of the present disclosure is excellent in blocking resistance, and further excellent in oxidation resistance even when heated at a high temperature for a long time. Further, the heating method for an alloy material of the present disclosure can suppress blocking and can suppress oxidation of an alloy material even when the alloy material is heated at a high temperature for a long time.

### BRIEF DESCRIPTION OF DRAWINGS

[FIG. 1] FIG. 1 is a plan view of a plate-shaped test specimen of test number 1-1 in an example.
[FIG. 2] FIG. 2 is a plan view of a plate-shaped test specimen of test number 1-2 in the example.
[FIG. 3] FIG. 3 is a plan view of a plate-shaped test specimen of test number 1-3 in the example.
[FIG. 4] FIG. 4 is a sectional observation view by a scanning electron microscope (Scanning Electron Microscope: SEM) of test number 1-1 in the example.
[FIG. 5] FIG. 5 is a sectional observation view by the SEM of test number 1-2 in the example.
[FIG. 6] FIG. 6 is a sectional observation view by the SEM of test number 1-3 in the example.
[FIG. 7] FIG. 7 is a view obtained by analyzing a section of the plate-shaped test specimen of test number 1-1 in the example by an electron probe micro analyzer (Electron Probe Micro Analyzer: EPMA).
[FIG. 8] FIG. 8 is a view obtained by analyzing a section of the plate-shaped test specimen of test number 1-2 in the example by the EPMA.
[FIG. 9] FIG. 9 is a view obtained by analyzing a section of the plate-shaped test specimen of test number 1-3 in the example by the EPMA.
[FIG. 10] FIG. 10 is a graph of a dust generation amount (mg/m³) when using antioxidant agents for heating alloy materials of test number 1-1 and test number 1-2 in the example.
[FIG. 11] FIG. 11 is a schematic view of a device for evaluating blocking resistance.

### DESCRIPTION OF EMBODIMENT

The present inventors have conducted various investigations and studies on antioxidant agents for heating alloy materials that are excellent in blocking resistance, and further excellent in oxidation resistance even when performing high-temperature long-time heating. In the following explanation, treatment of heating at a temperature of 1000 to 1350°C for 15 to 50 hours will be referred to as "high-temperature long-time heating".

First, the present inventors investigated the cause of the case in which sufficient oxidation resistance was not obtained when performing high-temperature long-time heating even by using the antioxidant agents disclosed in Patent Literature 1 to Patent Literature 9 described above.

As described above, when high-temperature long-time heating is carried out to an alloy material, scales mainly containing Fe are easily produced instead of Cr₂O₃ coating. In particular, in heating for a long time of 15 hours or more, the total of the supply amount of oxygen to the alloy material surface during heating increases as compared with heating for a short time. In this case, a Cr supply amount from an inside of the alloy material to an alloy material surface becomes insufficient to a necessary Cr amount for maintaining and producing the Cr₂O₃ coating. When the Cr supply amount to the alloy material surface becomes insufficient, Fe preferentially oxidizes over Cr to form FeO on the alloy material surface. The formed FeO further causes reaction of FeO + Cr₂O₃ = FeCr₂O₄ to the Cr₂O₃ coating. By the reaction, Cr₂O₃ is consumed, and the Cr₂O₃ coating breaks. In a part where the Cr₂O₃ coating is broken, oxidation of the alloy material is further accelerated. As a result, scales mainly containing FeO and FeCr₂O₄ are produced on the surface of the alloy material. Production of scales mainly containing FeO and FeCr₂O₄ is referred to as breakaway oxidation. When breakaway oxidation occurs, a yield may be reduced. Accordingly, it is preferable to be able to suppress occurrence of breakaway oxidation in the high-temperature long-time heating.

Therefore, the present inventors have investigated an antioxidant agent that can suppress breakaway oxidation. First, the present inventors carried out high-temperature long-time heating to the alloy materials in which surfaces are coated with the conventional antioxidant agents. As a result, it was found that with the conventional antioxidant agents, the antioxidant agents ran down or dripped from the surfaces of the alloy materials, while the high-temperature long-time heating was carried out. The alloy materials that were the objects to be heated are not configured by only planes parallel to a horizontal plane, but each has a three-dimensional morphology having an upper surface, a lower surface, side surfaces and the like. In the case of high-temperature long-time heating, the antioxidant agents are softened during heating for a long time, and drips from the surface of the alloy material. In particular, the antioxidant agent coated on the side surfaces and the lower surface of the alloy material in a furnace easily drips down during long-tine heating. In the part where the antioxidant agent for heating an alloy material drips down, of the surface of the alloy material, the Cr₂O₃ coating easily breaks, and breakaway oxidation easily occurs.

Therefore, the present inventors have investigated an antioxidant agent that hardly drips from the alloy material surface during high-temperature long-time heating, in other words, an antioxidant agent that tends to remain on the alloy material surface even during high-temperature long-time heating. As a result of the investigation, the present inventors considered to raise a softening point of an antioxidant agent for an alloy to cause the antioxidant agent for an alloy to remain on the alloy material surface. As a result of conducting various studies, the present inventors considered that when the softening point of the antioxidant agent for heating an alloy material is 800°C or more, the antioxidant agent for heating an alloy material hardly drips from the surface of the alloy material, and the antioxidant agent for heating an alloy material easily remains on the surface of the alloy material, even when the high-temperature long-time heating is carried out. Therefore, the present inventors investigated a composition of the antioxidant agent for heating an alloy material in which the softening point can be raised to 800°C or more, and obtained the antioxidant agent for heating an alloy material in which the softening point is 800°C or more.

However, even when the antioxidant agent for heating an alloy material with the softening point of 800°C or more was used, breakaway oxidation still sometimes occurred. Therefore, the present inventors further conducted investigations and studies. As a result, it has been found out that when the antioxidant agent for heating an alloy material contains a component that reacts with the Cr₂O₃ coating, breakaway oxidation occurs, even though the antioxidant agent has a high softening point. When the antioxidant agent for heating an alloy material contains the component that reacts with the Cr₂O₃ coating, the antioxidant agent for heating an alloy material reacts with the Cr₂O₃ coating, and the Cr₂O₃ coating melts. Accordingly, in order to suppress breakaway oxidation on the surface of the alloy material, it is effective to compose the antioxidant agent for heating an alloy material of a compound that hardly reacts with the Cr₂O₃ coating.

As the antioxidant agent for heating an alloy material, a glass frit is generally used. A glass frit means flaky, granular, or powdery glass obtained by crushing glass to an appropriate size. As the glass frit, B₂O₃ is generally used. However, B₂O₃ reacts with the Cr₂O₃ coating to melt the Cr₂O₃ coating. Accordingly, in the antioxidant agent for heating an alloy material of the present embodiment, a content of B₂O₃ is preferably reduced as much as possible.

Further, as the glass frit for the antioxidant agent for heating an alloy material, Na₂O is also generally used. However, Na₂O also reacts with the Cr₂O₃ coating to melt the Cr₂O₃ coating similarly to B₂O₃. Accordingly, in the antioxidant agent for heating an alloy material of the present embodiment, a content of Na₂O is also preferably reduced as much as possible.

Therefore, the present inventors examined the components of the antioxidant agent having the softening point of 800°C or more while suppressing the contents of B₂O₃ and Na₂O that easily react with the Cr₂O₃ coating in the high-temperature long-time heating time. As a result, the present inventors have found that the antioxidant agent for heating an alloy material containing, in mass%, when converted into oxides, SiO₂: 40.0 to 80.0%, Al₂O₃: 0 to 30.0%, and MgO: 0 to 5.0%, further containing a total of 10.00 to 50.00% of one kind or more selected from a group consisting of Na₂O: 9.0% or less, K₂O: 20.00% or less, and CaO: 25.0% or less, and further containing B₂O₃: 0 to less than 0.5% hardly drips from the alloy material surface even during high-temperature long-time heating, tends to remain on the alloy material surface, and can suppress occurrence of breakaway oxidation attributable to the reaction with Cr₂O₃. When an alloy material was heated at a high temperature for a long time by using the antioxidant agent for heating an alloy material having the above described composition and softening point, oxidation of the alloy material was able to be sufficiently suppressed.

However, the antioxidant agent for heating an alloy material having the above described composition and softening point was sometimes unable to suppress the aforementioned blocking even though it was able to suppress oxidation of the alloy material in the high-temperature long-time heating. The present inventors investigated the cause of this in detail. As a result, the present inventors have obtained the following finding.

The antioxidant agent for heating an alloy material is a flaky, granular, or powdery, for example, before heating. The antioxidant agent for heating an alloy material melts by being heated. Network structures are formed in the melted antioxidant agent for heating an alloy material. The network structures are structures that expand in a net form in the melted antioxidant agent for heating an alloy material, and can be connected to one another. The melted antioxidant agent for heating an alloy material increases in spinnability by the network structures connecting to one another. Spinnability refers to a property extending in a thread form. When the spinnability of the antioxidant agent for heating an alloy material is high, the antioxidant agent for heating an alloy material easily extend in a thread form.

As described above, as the reheating furnace that heats the alloy material, a batch type reheating furnace may be used. When the alloy material is heated by the batch type reheating furnace, the alloy materials are heated in a stacked state in the batch type reheating furnace. In the reheating furnace, the alloy material is stacked on other alloy materials in a state in which the antioxidant agent is attached to the surface. Therefore, the antioxidant agent is interposed among the stacked alloy materials. When the spinnability of the antioxidant agent is high, the alloy materials stacked on one another adhere to one another via the antioxidant agent under a high-temperature environment. If the alloy materials stacked on one another excessively adhere to one another, it becomes difficult to extract the alloy materials separately from the reheating furnace. In the present description, it is called blocking that the alloy materials adhere to one another so that it becomes difficult to extract the alloy materials separately from the reheating furnace. On the other hand, if the spinnability of the antioxidant agent for heating an alloy material is low, the alloy materials hardly adhere to one another. In this case, blocking is suppressed.

Therefore, the present inventors further conducted studies on the antioxidant agent that has a composition hardly reacting with Cr₂O₃, has a softening point of 800°C or more, and further can suppress blocking, from a viewpoint of the composition. As a result, the present inventors have further obtained the following finding.

Components that form network structures in the coating are SiO₂ and Al₂O₃. On the other hand, components that cut the network structure are MgO, B₂O₃, Na₂O, K₂O and CaO. The components that form the network structure increase spinnability of the antioxidant agent for heating an alloy material. On the other hand, the components that cut the network structure reduce the spinnability of the antioxidant agent for heating an alloy material. Therefore, the present inventors considered that it is possible to reduce the spinnability of the antioxidant agent for heating an alloy material by properly adjusting a balance of the components forming the network structures, and the components that cut the network structures.

Specifically, if the antioxidant agent for heating an alloy material satisfies Formula (1), it can reduce spinnability:

(2SiO₂ + Al₂O₃) / (0.1MgO + 0.2B₂O₃ + 6Na₂O + 1.4K₂O + 2CaO) ≤ 2.50 (1)

where, the content in mass% of the corresponding component is substituted for each chemical formula in Formula (1).

(2SiO₂ + Al₂O₃) / (0.1MgO + 0.2B₂O₃ + 6Na₂O + 1.4K₂O + 2CaO) = F1 is defined. It is possible to use F1 as an index showing spinnability of an antioxidant agent for heating an alloy material. When F1 ≤ 2.50 is satisfied, the components that cut the network structures are sufficiently contained with respect to the components that form the network structures. In this case, the spinnability of the antioxidant agent for heating an alloy material is reduced. As a result, blocking can be suppressed.

An antioxidant agent for heating an alloy material and a heating method for an alloy material of the present embodiment that is completed based on the above findings are defined in claims.

The antioxidant agent for heating an alloy material of the present embodiment is suitable for the case of heating an alloy material producing Cr₂O₃ coating at a temperature of 1000 to 1350°C for 15 to 50 hours, and is particularly suitable for the case of heating the alloy material at a high temperature of 1300°C or more for 25 hours or more.

When the antioxidant agent for heating an alloy material of the present embodiment is used, the alloy material is excellent in oxidation resistance even when heating for a long time that is kept at a temperature of 1000 to 1350°C for 15 to 50 hours is carried out in the alloy material that produces the Cr₂O₃ coating. The antioxidant agent for heating an alloy material of the present embodiment is further excellent in blocking resistance.

Hereinafter, the antioxidant agent for heating an alloy material according to the present embodiment will be described in detail. Concerning each component, "%" means mass% when a total amount of the compositions of compounds of the antioxidant agent for heating an alloy material is set as 100%, unless otherwise noted.

The antioxidant agent for heating an alloy material of the present embodiment contains the following compounds. If the antioxidant agent for heating an alloy material is composed of the following compounds, the softening point of the antioxidant agent for heating an alloy material can be made 800°C or more. The antioxidant agent for heating an alloy material is a flaky, granular, or powdery glass frit, and the content of each compound is a content that one grain of the glass frit contains on average.

### SiO₂: 40.0 to 80.0%

Silica (SiO₂) forms a protection coating on the alloy material surface with the other components during high-temperature long-time heating. SiO₂ is a matrix of the protection coating. The protection coating suppresses supply of oxygen to the alloy material surface. SiO₂ further has a high softening point of 1600°C or more. When the antioxidant agent for heating an alloy material contains SiO₂, the softening point of the antioxidant agent for heating an alloy material is raised. Accordingly, even during high-temperature long-time heating, the antioxidant agent for heating an alloy material hardly drips from the alloy material surface, and easily remains on the alloy material surface. If the antioxidant agent for heating an alloy material has 40.0% or more of SiO₂ content, the antioxidant agent for heating an alloy material coats the alloy material surface, and can suppress supply of the oxygen to the alloy material surface, even during high-temperature long-time heating. As a result, oxidation resistance is increased. If the oxidation resistance is increased, soot and dust derived from MoO₃ can be suppressed when an alloy material containing Mo is used. In other words, dust proof is increased. When the SiO₂ content is less than 40.0%, viscosity of the antioxidant agent for heating an alloy material becomes low, and the antioxidant agent for heating an alloy material easily drips, during high-temperature long-time heating. As a result, the above described effect cannot be obtained sufficiently. On the other hand, when the SiO₂ content becomes more than 80.0%, the softening point of the antioxidant agent for heating an alloy material becomes too high. In this case, the antioxidant agent for heating an alloy material is less likely to get wet and spread. As a result, it becomes difficult to coat the entire alloy material surface uniformly with the antioxidant agent for heating an alloy material, and oxidation resistance is reduced. When the oxidation resistance is reduced, the dust proof is also reduced when an alloy material containing Mo is used. When the SiO₂ content becomes more than 80.0%, the softening point of the antioxidant agent for heating an alloy material becomes higher. Consequently, the components that are mixed become less likely to melt, and production of the antioxidant agent for heating an alloy material itself becomes difficult. Accordingly, the SiO₂ content is 40.0 to 80.0%. A lower limit of the SiO₂ content is preferably 45.0%, and more preferably 50.0%. An upper limit of the SiO₂ content is preferably 75.0%, and more preferably 70.0%.

### Al₂O₃: 0 to 30.0%

Alumina (Al₂O₃) may not be contained. In other words, an Al₂O₃ content may be 0%. When contained, Al₂O₃ forms a protection coating on the alloy material surface during high-temperature long-time heating similarly to SiO₂. Al₂O₃ further raises the softening point of the antioxidant agent for heating an alloy material. Therefore, during high-temperature long-time heating, the antioxidant agent for heating an alloy material hardly drips down, and easily remains on the alloy material surface. As a result, the oxidation resistance of the alloy material is increased. When the oxidation resistance of the alloy material is increased, dust proof is also increased when an alloy material containing Mo is used. However, when the Al₂O₃ content becomes more than 30.0%, a content ratio of SiO₂ is reduced, and therefore, the protection coating does not become a matrix mainly containing SiO₂. As a result, viscosity of the antioxidant agent for heating an alloy material becomes low, and the antioxidant agent for heating an alloy material drips during high-temperature long-time heating. Accordingly, the Al₂O₃ content is 0 to 30.0%. A lower limit of the Al₂O₃ content is preferably 1.0%, more preferably 5.0%, and even more preferably 10.0%. An upper limit of the Al₂O₃ content is preferably 28.0%, and more preferably 25.0%.

### MgO: 0 to 5.0%

Magnesia (MgO) may not be contained. In other words, a MgO content may be 0%. When contained, MgO forms a protection coating on an alloy material surface during high-temperature long-time heating, similarly to SiO₂ and Al₂O₃. MgO further lowers the softening point of the antioxidant agent for heating an alloy material. Consequently, during high-temperature long-time heating, the antioxidant agent for heating an alloy material gets wet and spreads to cover the alloy material surface uniformly. However, when the MgO content becomes more than 5.0%, MgO melts the Cr₂O₃ coating that is a protection coating, so that the Cr₂O₃ coating is not sufficiently formed. As a result, oxidation resistance is reduced. When an alloy material containing Mo is used, dust proof is also reduced. Accordingly, the MgO content is 0 to 5.0%. A lower limit of the MgO content is preferably 0.1%, and more preferably 0.2%. An upper limit of the MgO content is preferably 4.0%, and more preferably 3.0%.

One kind or more selected from a group consisting of Na₂O: 9.0% or less, K₂O: 20.00% or less, and CaO: 25.0% or less: 10.00 to 50.00% in total
Na₂O is more than 0%, K₂O is more than 0%, and CaO is more than 0%. When the total content of one kind or more selected from the group consisting of Na₂O: 9.0% or less, K₂O: 20.00% or less, and CaO: 25.0% or less is less than 10.00%, flowability of the antioxidant agent for heating an alloy material at a high temperature is reduced. On the other hand, when the total content of one kind or more selected from the group consisting of Na₂O: 9.0% or less, K₂O: 20.00% or less, and CaO: 25.0% or less is more than 50.00%, the softening point of the antioxidant agent for heating an alloy material is excessively reduced. When the softening point of the antioxidant agent for heating an alloy material is reduced, the antioxidant agent for heating an alloy material drips from the alloy material surface during high-temperature long-time heating. Accordingly, the total content of one kind or more selected from the group consisting of Na₂O: 9.0% or less, K₂O: 20.00% or less, and CaO: 25.0% or less is 10.00 to 50.00%.

A lower limit of the total content of one kind or more selected from the group consisting of Na₂O: 9.0% or less, K₂O: 20.00% or less, and CaO: 25.0% or less is preferably 15.00%, and is more preferably 20.00%. An upper limit of the total content of one kind or more selected from the group consisting of Na₂O: 9.0% or less, K₂O: 20.00% or less, and CaO: 25.0% or less is preferably 45.00%, and is more preferably 40.00%.

### Na₂O: 9.0% or less

Sodium oxide (Na₂O) is unavoidably contained in the antioxidant agent for heating an alloy material mainly containing SiO₂. Na₂O increases flowability of the antioxidant agent for heating an alloy material at a high temperature. However, Na₂O reacts with the Cr₂O₃ coating and causes the Cr₂O₃ coating to easily break. In particular, when the Cr content of the alloy material is less than 20.0% by mass, the Cr₂O₃ coating easily breaks. Further, when the Na₂O content is more than 9.0%, the softening point of the antioxidant agent for heating an alloy material is excessively lowered. Accordingly, the Na₂O content is 9.0% or less, and more specifically, the Na₂O content is more than 0% to 9.0%. A lower limit of Na₂O is preferably 0.1%, and more preferably 0.2%. An upper limit of the Na₂O content is 9.0%, preferably 7.0%, more preferably 6.0%, even more
preferably 5.0%, even more preferably 4.0%, even more preferably 3.0%, and even more preferably 2.0%.

### K₂O: 20.00% or less

Potassium oxide (K₂O) is unavoidably contained in the antioxidant agent for heating an alloy material mainly containing SiO₂. K₂O lowers the softening point of the antioxidant agent for heating an alloy material. When the softening point is lowered, flowability at a high temperature is increased, and the antioxidant agent for heating an alloy material easily gets wet and spreads. As a result, the alloy material surface is easily coated uniformly with the antioxidant agent for heating an alloy material. However, when a K₂O content becomes more than 20.00%, the softening point of the antioxidant agent for heating an alloy material is excessively lowered. In this case, during high-temperature long-time heating, the antioxidant agent for heating an alloy material drips from the alloy material surface, and breakaway oxidation easily occurs. When the antioxidant agent for heating an alloy material drips from the alloy material surface, soot and dust derived from MoO₃ are easily generated when the alloy material containing Mo is used. Accordingly, the K₂O content is 20.00% or less, and more specifically, the K₂O content is more than 0% to 20.00%. A lower limit of the K₂O content is preferably 0.01%, and more preferably 0.02%. An upper limit of the K₂O content is preferably 19.50%, and more preferably 19.00%.

### CaO: 25.0% or less

Calcium oxide (CaO) is unavoidably contained in the antioxidant agent for heating an alloy material mainly containing SiO₂. CaO lowers the softening point of the antioxidant agent for heating an alloy material, similarly to K₂O. When the softening point is lowered, flowability at a high temperature is increased, and the antioxidant agent for heating an alloy material easily gets wet and spreads to the alloy material surface. As a result, the alloy material surface is easily coated uniformly with the antioxidant agent for heating an alloy material. However, when a CaO content becomes more than 25.0%, the softening point of the antioxidant agent for heating an alloy material is excessively lowered. When the softening point of the antioxidant agent for heating an alloy material is lowered, the antioxidant agent for heating an alloy material drips from the surface of the alloy material, and breakaway oxidation easily occurs, during high-temperature long-time heating. When the antioxidant agent for heating an alloy material drips from the alloy material surface, soot and dust derived from MoO₃ are easily generated when the alloy material containing Mo is used. Accordingly, the CaO content is 25.0% or less, and more specifically, the CaO content is more than 0% to 25.0%. A lower limit of the CaO content is preferably 0.6%, more preferably 0.8%, even more preferably 10.0%, even more preferably 11.0%, and even more preferably 12.0%. An upper limit of the CaO content is preferably 24.5%, and more preferably 24.0%.

### B₂O₃: 0 to less than 0.5%

Boric acid (B₂O₃) is an impurity. In other words, a B₂O₃ content may be 0%. B₂O₃ is a well-known compound as an antioxidant agent. However, B₂O₃ reacts with the Cr₂O₃ coating, and melts the Cr₂O₃ coating during high-temperature long-time heating. In this case, breakaway oxidation easily occurs. When the Cr₂O₃ coating is melted, soot and dust derived from MoO₃ are easily generated when the alloy material containing Mo is used. Accordingly, the B₂O₃ content is 0 to less than 0.5%. The B₂O₃ content is preferably as low as possible. An upper limit of the B₂O₃ content is preferably 0.4%, more preferably 0.3%, and even more preferably 0%.

The balance of the composition of compounds of the antioxidant agent for heating an alloy material according to the embodiment of the present invention is impurities. Here, impurities mean those mixed from an inorganic material as a raw material, or a production environment or the like when the antioxidant agent for heating an alloy material is industrially produced, and allowed in a range without having an adverse effect on the antioxidant agent for heating an alloy material of the present embodiment.

### [Formula (1)]

The antioxidant agent for heating an alloy material satisfies Formula (1):

(2SiO₂ + Al₂O₃) / (0.1MgO + 0.2B₂O₃ + 6Na₂O + 1.4K₂O + 2CaO) ≤ 2.50 (1)

where a content in mass% of a corresponding component is substituted for each chemical formula in Formula (1).

(2SiO₂ + Al₂O₃) / (0.1MgO + 0.2B₂O₃ + 6Na₂O + 1.4K₂O + 2CaO) = F1 is defined. When F1 becomes more than 2.50, the components that form network structures are excessively contained with respect to the components that cut the network structures, in the components of the antioxidant agent for heating an alloy material. Therefore, spinnability of the antioxidant agent for heating an alloy material is increased. As a result, after high-temperature long-time heating, the alloy materials adhere to each other, and blocking occurs. Accordingly, F1 ≤ 2.50 is established. An upper limit of F1 is preferably 2.45, more preferably 2.40, and even more preferably 2.30. A lower limit of F1 is not particularly limited, but is 0.62, for example.

### [Softening point]

The softening point of the antioxidant agent for heating an alloy material is 800°C or more. When the softening point of the antioxidant agent for heating an alloy material is 800°C or more, the antioxidant agent for heating an alloy material gets wet and spreads to the entire alloy material surface, and covers the surface, when high-temperature long-time heating is carried out. As a result, oxidation of the alloy material surface is suppressed. When the softening point of the antioxidant agent for heating an alloy material is less than 800°C, the antioxidant agent for heating an alloy material drips from the alloy material surface, and the alloy material surface is partially exposed, when high-temperature long-time heating is carried out. In the exposed part, supply of oxygen to the alloy material surface cannot be suppressed. As a result, breakaway oxidation occurs to the alloy material surface. Furthermore, since supply of oxygen to the alloy material surface cannot be suppressed, soot and dust derived from MoO₃ are easily generated when the alloy material containing Mo is used. Accordingly, the softening point of the antioxidant agent for heating an alloy material is 800°C or more. A lower limit of the softening point of the antioxidant agent for heating an alloy material is preferably 820°C, more preferably 840°C, and even more preferably 860°C. An upper limit of the softening point of the antioxidant agent for heating an alloy material is not particularly limited, but is 1100°C, for example.

The softening point of the antioxidant agent for heating an alloy material is determined by the compositions of the compounds of the antioxidant agent for heating an alloy material. With the compositions of the compounds of the antioxidant agent for heating an alloy material of the present embodiment, the softening point is 800°C or more.

### [Measuring Method of Softening Point]

The softening point of the antioxidant agent for heating an alloy material is measured by using a simultaneous thermogravimetry/differential thermal analysis device (TG-DTA). Specifically, this is as follows. 10 mg of the antioxidant agent for heating an alloy material is placed in a test specimen holder of TG-DTA. The antioxidant agent for heating an alloy material is heated to 1300°C at a heating rate of 10°C/minute. The atmosphere during heating is air. Differential thermal at this time is measured, and a fourth inflection point in a DTA (differential thermal) chart is determined as the softening point of the antioxidant agent for heating an alloy material.

The aforementioned antioxidant agent for heating an alloy material is excellent in blocking resistance, and is excellent in oxidation resistance even when high-temperature long-time heating is performed. The present inventors have further found that when coated on the alloy material containing Mo, the aforementioned antioxidant agent for heating an alloy material shows excellent dust proof.

When the conventional antioxidant agent for heating an alloy material containing SiO₂ and more than 10.0% of Na₂O is used, Na₂O excessively melts the Cr₂O₃ coating of the alloy material as described above. When the Cr₂O₃ coating melts, Mo inside the alloy material reacts with oxygen in the air, and MoO₃ is produced. MoO₃ has a low boiling point. Therefore, white soot and dust derived from MoO₃ are generated during high-temperature long-time heating and hot working. Soot and dust reduce visibility of an operator. Accordingly, it is preferable to be able to suppress generation of soot and dust derived from MoO₃.

When the antioxidant agent for heating an alloy material of the present embodiment is used, the Cr₂O₃ coating is hardly melted. Therefore, Mo inside of the alloy material is hardly oxidized, and MoO₃ is hardly produced. As a result, generation of white soot and dust derived from MoO₃ can be suppressed during high-temperature long-time heating and during hot working.

### [Morphology of Antioxidant Agent for Heating Alloy Material]

The antioxidant agent for heating an alloy material is a glass frit. A glass frit is glass obtained by melting powder of each of the above-described components and solidifying, and thereafter crushing. The antioxidant agent for heating an alloy material is flaky, granular, or powdery, for example.

When the antioxidant agent for heating an alloy material is powdery, a particle size is preferably 25 µm or less. The particle size mentioned here is a volume average particle size (median diameter) D50. The volume average particle size D50 can be obtained by the following method. The volume particle size distribution of the glass frit is obtained by a particle counter. By using the obtained volume particle size distribution, a particle size at which a cumulative volume becomes 50% from a small particle size side in the cumulative volume distribution is defined as the volume average particle size D50. If the particle size is 25 µm or less, the antioxidant agent for heating an alloy material easily disperses into a solution (water) at a normal temperature, and a slurry is easily produced.

### [Production Method of Antioxidant Agent for Heating Alloy Material]

The antioxidant agent for heating an alloy material of the present embodiment is produced by the following method. The above described components composing the antioxidant agent for heating an alloy material are mixed. The mixed components are melted, and rapidly cooled in water or air to vitrify. The melting temperature is, for example, 1400 to 1600°C. Rapid cooling is performed after melting, and crushing is performed. The particle size of the antioxidant agent for heating an alloy material of the present embodiment is, for example, 1 µm to 25 µm. Thereby, the softening point can be adjusted to the softening point of the antioxidant agent for heating an alloy material of the present embodiment. The antioxidant agent for heating an alloy material of the present embodiment is produced by the above process.

The antioxidant agent for heating an alloy material of the present embodiment can be used in production of an alloy material. The antioxidant agent for heating an alloy material of the present embodiment can be applied to a time of carrying out heating (high-temperature long-time heating) at 1000 to 1350°C for 15 to 50 hours to the alloy material having 12 to 50% by mass Cr content, for example. The antioxidant agent for heating an alloy material of the present embodiment is particularly preferable for heating at 1300°C or more for 25 hours or more. Even when heating at a temperature of 1000 to 1350°C for a short time of less than 15 hours is carried out, it has excellent oxidation resistance. Hereinafter, this point will be described.

### [Alloy Material]

An alloy material as an object for which the antioxidant agent for heating an alloy material of the present embodiment is used is a Fe-based or Ni-based alloy material containing Cr. The Fe-based alloy material is an alloy material having 50% by mass or more Fe content. The Ni-based alloy material is an alloy material having 50% by mass or more Ni content. A Cr content in the alloy material may be 12 to 50% in mass%. The Cr content in the alloy material may be 20 to 40% in mass%. The alloy material containing Cr may be, for example, an alloy material containing Si: 0 to 5%, Mn: 0 to 20%, Cr: 12 to 50%, Mo: 0 to 15%, W: 0 to 10%, Cu: 0 to 5%, Ti: 0 to 3%, V: 0 to 1%, and Al: 0 to 5%, in which a total content of the above described elements, and Fe and/or Ni is 99% or more. When the Cr content of the alloy material is 20% by mass or more, the Cr₂O₃ coating is easily maintained for a longer time.

The antioxidant agent for heating an alloy material of the present embodiment is particularly suitable for alloy materials of cast materials. The alloy materials are, for example, stainless steel materials, which are, for example, martensitic stainless steel materials, ferrite stainless steel materials, austenitic stainless steel materials, precipitation hardening stainless steel materials, and duplex stainless steel materials. The antioxidant agent for heating an alloy material of the present embodiment is particularly suitable for the alloy materials of cast materials. However, the antioxidant agent for heating an alloy material of the present embodiment is not limited to the cast materials, but may be applied to worked materials obtained by carrying out hot working to the cast materials. In short, the antioxidant agent for heating an alloy material of the present embodiment is widely applicable to alloy materials (cast materials, worked materials).

Further, the antioxidant agent for heating an alloy material of the present embodiment has excellent dust proof when alloy materials that are the above described alloy materials and have more than 0% of Mo content are used. As described above, during high-temperature long-time heating, the Cr₂O₃ coating easily melts. When the Cr₂O₃ coating of the alloy material containing Mo melts, MoO₃ is produced. As a result, soot and dust derived from MoO₃ are generated. However, when the antioxidant agent for heating an alloy material of the present embodiment is used, the Cr₂O₃ coating can be maintained for a longer time, so that production of MoO₃ can be suppressed.

### [Heating Method for Alloy Material Using Antioxidant Agent for Heating Alloy Material of Present Embodiment]

The heating method for an alloy material of the present embodiment includes a step of coating a surface of an alloy material with an antioxidant agent for heating an alloy material, and a step of heating the alloy material coated with the antioxidant agent for heating an alloy material.

### [Coating Step]

In the coating step, an antioxidant agent for heating an alloy material is prepared first. The prepared antioxidant agent for heating an alloy material is made a slurry, for example. The slurry is produced by mixing water in the antioxidant agent for heating an alloy material, for example. A surface (an upper surface, a lower surface, and side surfaces) of the alloy material before heating is coated with the slurry. By coating the antioxidant agent for heating an alloy material as the slurry, the alloy material surface before heating is easily coated with the antioxidant agent for heating an alloy material substantially uniformly.

In the slurry, a preferable content of water is 70 to 100 parts by mass with respect to 100 parts by mass the antioxidant agent for heating an alloy material. When the content of water is too small, or too large, the antioxidant agent for heating an alloy material is difficult to coat. If the content of water is adjusted, viscosity of the slurry can be adjusted to such an extent that the surface of the alloy material can be coated substantially uniformly at a normal temperature.

The slurry may further contain a suspending agent and a dispersing agent.

The suspending agent substantially uniformly disperses the antioxidant agent for heating an alloy material into a solution (water). The suspending agent contains, for example, potter's clay, and bentonite and/or sepiolite. When the antioxidant agent for heating an alloy material of the present embodiment is coated on the surface of the alloy material with potter's clay, and bentonite and/or sepiolite, the antioxidant agent for heating an alloy material hardly drips on the surface of the alloy material, and the antioxidant agent for heating an alloy material hardly peels from the surface of the alloy material when dried and solidified.

The potter's clay contains kaolinic clay, and a plurality of quartz particles. More specifically, the potter's clay contains kaolinite, halloysite, and quartz.

The potter's clay increases dripping resistance of the liquid antioxidant agent for heating an alloy material. The slurry containing the potter's clay hardly drips after coated on the surface of the alloy material at a normal temperature. Therefore, if containing the potter's clay, the antioxidant agent for heating an alloy material easily covers the entire surface of the alloy material at a normal temperature.

When the slurry contains potter's clay, a preferable content of the potter's clay is 4 parts by mass or more, with respect to 100 parts by mass the antioxidant agent for heating an alloy material, in the slurry. In this case, the antioxidant agent for heating an alloy material at a normal temperature hardly drips. The content of the potter's clay is more preferably 5 parts by mass or more, and even more preferably 6 parts by mass or more. If the slurry excessively contains potter's clay, the antioxidant agent for heating an alloy material in the slurry hardly disperses uniformly on the surface of the alloy material, and oxidation resistance is reduced. Accordingly, an upper limit of the content of the potter's clay is preferably 30 parts by mass.

However, even if the content of the potter's clay is less than 4 parts by mass, dripping of the antioxidant agent for heating an alloy material at a normal temperature can be suppressed to some extent.

Bentonite is clay having montmorillonite as a main component. Bentonite may further contain silicic acid minerals such as quartz and opal, silicate minerals such as feldspar and zeolite, carbonate minerals such as dolomite and sulfate minerals, sulfide minerals such as pyrite or the like.

Sepiolite is hydrous magnesium silicate, and is represented by a chemical formula of Mg₈Si₁₂O₃₀(OH)₄(OH₂)₄·8H₂O, for example.

Bentonite and sepiolite both prevent the antioxidant agent for heating an alloy material from peeling. Specifically, liquid slurry is coated on the surface of the alloy material. Subsequently, moisture in the slurry coated on the alloy material is evaporated by heating or drying, and the antioxidant agent for heating an alloy material is solidified. When the slurry contains bentonite and/or sepiolite, bentonite and sepiolite prevent the solidified antioxidant agent for heating an alloy material from peeling from the surface of the alloy material. The slurry containing bentonite and/or sepiolite hardly peels off even when receiving an external force. When the slurry contains bentonite and/or sepiolite, the slurry can contain any one kind or more of bentonite and sepiolite.

When the slurry contains bentonite and/or sepiolite, a lower limit of the content of bentonite and/or sepiolite is preferably 4 parts by mass or more with respect to 100 parts by mass the antioxidant agent for heating an alloy material, in the slurry. When the content of bentonite and/or sepiolite is 4 parts by mass or more, anti-peeling property of the antioxidant agent for heating an alloy material is further increased. When the slurry contains bentonite and sepiolite, a lower limit of a total value of a bentonite content and a sepiolite content is preferably 5 parts by mass or more.

Further, when the slurry contains bentonite and/or sepiolite, an upper limit of the content of bentonite and/or sepiolite is preferably less than 9 parts by mass with respect to 100 parts by mass the antioxidant agent for heating an alloy material. When the content of bentonite and/or sepiolite becomes more than 9 parts by mass, the antioxidant agent for heating an alloy material is hardly dispersed in the liquid slurry. In other words, it becomes difficult for the antioxidant agent for heating an alloy material to form a slurry. When the slurry contains bentonite and sepiolite, an upper limit of a total value of the content of bentonite and the content of sepiolite is preferably less than 8 parts by mass.

However, even when the content of bentonite and/or sepiolite becomes more than the aforementioned range, an effect of suppressing peeling of the antioxidant agent for heating an alloy material is obtained to some extent.

The suspending agent may contain other clays than the aforementioned potter's clay, bentonite and sepiolite. The clays contain iron oxide (Fe₂O₃), for example.

In the embodiment of the present invention, the slurry may not contain a dispersing agent. However, from viewpoints of increasing dispersibility of the entire antioxidant agent for heating an alloy material, and increasing workability, the slurry preferably contains a dispersing agent. If the slurry contains a dispersing agent, the amount of water that disperses the antioxidant agent for heating an alloy material can be reduced, and as a result, adhesiveness is increased. The dispersing agent is one kind or more selected from a group consisting of sodium tripolyphosphate, sodium hexametaphosphate, ultrapolysodium phosphate, acidic sodium hexametaphosphate, boric acid soda, sodium carbonate, inorganic salt such as polymethaphosphate, sodium citrate, sodium tartrate, polyacrylic acid, sodium polyacrylate, sodium sulphonate, polycarboxylate, β-naphthalene sulfonates, melanin sulfonates, and naphthalene sulfonic acid. In the slurry, a preferable content of the dispersing agent is less than 4.5 parts by mass in total with respect to 100 parts by mass the antioxidant agent for heating an alloy material in the slurry.

The antioxidant agent for heating an alloy material formed into a slurry is coated on the surface of the alloy material before heating. In other words, the antioxidant agent for heating an alloy material formed into a slurry is coated on the surface of the alloy material at a normal temperature.

A coating method of the antioxidant agent for heating an alloy material formed into a slurry is not particularly limited. A worker may coat the surface of the alloy material with the antioxidant agent for heating an alloy material formed in a slurry by using a brush. Further, the surface of the alloy material may be coated with the antioxidant agent for heating an alloy material formed into a slurry by spray or the like. A bath in which the antioxidant agent for heating an alloy material formed in a slurry is stored is prepared, and the alloy material may be dipped in the bath (so-called "dipping"). By these coating methods, the antioxidant agent for heating an alloy material is coated on the surface of the alloy material. After the antioxidant agent for heating an alloy material is coated on the surface of the alloy material, the antioxidant agent for heating an alloy material may be dried.

### [Heating step]

Subsequently, the alloy material coated with the antioxidant agent for heating an alloy material is heated (heating step). In the heating step, heating is applied at a temperature of 1000 to 1350°C for 15 to 50 hours, for example, to the alloy material coated with the antioxidant agent for heating an alloy material.

The antioxidant agent for heating an alloy material of the present embodiment contains the aforementioned compounds. The aforementioned compounds hardly react with the Cr₂O₃ coating on the alloy material surface. Therefore, it prevents the Cr₂O₃ coating from breaking during high-temperature long-time heating. Further, when it is used to the alloy material containing Mo, soot and dust derived from MoO₃ can be suppressed. The antioxidant agent for heating an alloy material of the present embodiment further has the softening point of 800°C or more. Therefore, even during high-temperature long-time heating, the antioxidant agent for heating an alloy material hardly drips from the alloy material surface, and remains on the alloy material surface. As a result, occurrence of breakaway oxidation can be suppressed, and even in high-temperature long-time heating, oxidation of the alloy material can be suppressed. The antioxidant agent for heating an alloy of the present embodiment further satisfies Formula (1). Therefore, spinnability of the antioxidant agent for heating an alloy material is low. As a result, adhesion of the alloy materials can be suppressed, and blocking can be suppressed.

### [Example 1]

Hereinafter, an effect of the antioxidant agent for heating an alloy material of the present embodiment will be described more specifically based on an example. Conditions in the following example are one condition example that is adopted to confirm implementability and effects of the antioxidant agent for heating an alloy material of the present embodiment. Accordingly, the antioxidant agent for heating an alloy material of the present embodiment is not limited to the one condition example.

A plurality of antioxidant agents for heating an alloy material that have different compositions of compounds were prepared. An oxidation confirmation test, and an oxidation weight reduction measurement test were carried out as evaluations of oxidation resistance, by using the plurality of antioxidant agents for heating an alloy material that were prepared.

### [Oxidation Confirmation Test]

Antioxidant agents for heating an alloy material shown in Table 1 were prepared. Test number 1-1 and Test number 1-4 had compositions described in Table 1, and the balances were impurities. The compositions of the antioxidant agents for heating an alloy material were obtained by producing the antioxidant agents for heating an alloy material, thereafter drying them, and performing highfrequency inductively coupled plasma (ICP: Inductively Coupled Plasma) analysis. Specifically, the contents of Si, Al, Mg, Na, K, Ca and B that were obtained by ICP were respectively converted into the contents of SiO₂, Al₂O₃, MgO, Na₂O, K₂O, CaO and B₂O₃, and the contents of the respective components were obtained. In Test number 1-2, the product name AKNAS (softening point: 700°C) made by Tokan Material Technology Co., Ltd. was used. Compositions of compounds of the product name AKNAS were unknown.

### [Table 1]

**TABLE 1**

| Test number | Composition of antioxidant agent for heating high alloy material (in mass%, balance is impurities) | | | | | | Na₂O, K₂O, CaO Total content (mass%) | Softening point (°C) | Oxidation confirmation test | | |
|---|---|---|---|---|---|---|---|---|---|---|---|
| | SiO₂ | Al₂O₃ | MgO | Na₂O | K₂O | CaO | | | Oxidation state | Effect on base metal | Success or failure |
| 1-1 | 56.8 | 11.5 | 0.2 | 0.2 | 18.20 | 13.0 | 31.40 | 870 | Uniform, normal oxidation | None | Success |
| 1-2 | Unknown | | | | | | | 700 | Breakaway oxidation occurred | RECESS of depth of approximately 1.5 mm in multiple spots | Failure |
| 1-3 | No coating of antioxidant agent | | | | | | | | Severely oxidated on entire surface | Reduction in thickness of approximately 0.8 mm on entire surface | Failure |
| 1-4 | 60.1 | 14.6 | 0.2 | 1.5 | 0.02 | 23.5 | 25.02 | 900 | Uniform, normal oxidation | None | Success |

The softening point of the antioxidant agent for heating an alloy material of each test number was measured by using a simultaneous thermogravimetry/differential thermal analysis device (TG-DTA). Specifically, this is as follows. 10 mg of the antioxidant agent for heating an alloy material was placed in a test specimen holder of TG-DTA. The antioxidant agent for heating an alloy material was heated to 1300°C at a heating rate of 10°C/minute. The atmosphere during heating is air. A latent heat at this time was measured, and the fourth inflection point of the DTA (differential thermal) chart was determined as the softening point of the antioxidant agent for heating an alloy material. The result is shown in Table 1.

A plate-shaped test specimen simulating an alloy material was prepared. As the plate-shaped test specimen, a duplex stainless steel material corresponding to A240 UNS S39274 defined in ASTM was used. The size of the plate-shaped test specimen was 13 mm thick, 40 mm long and 100 mm wide.

The slurry was produced by mixing 6 parts by mass potter's clay, 5 parts by mass bentonite, and 70 to 100 parts by mass water, with respect to 100 parts by mass the antioxidant agent for heating an alloy material. The obtained slurry was coated on the surface of 40 mm by 100 mm that is the upper surface of the plate-shaped test specimen by using a brush, and thereafter was dried.

The plate-shaped test specimen after coated with the antioxidant agent for heating an alloy material was heated at 1300°C for 25 hours. The atmosphere simulated LNG combustion. Specifically, the atmospheric gas was adjusted so that the composition of the atmospheric gas was such that 2 to 3% of O₂, 8 to 10% of CO₂, 15 to 20% of H₂O and the balance being N₂.

Whether or not breakaway oxidation occurs to the plate-shaped test specimen after heating was confirmed by the following method. The surface of 40 mm by 100 mm that was the upper surface was visually observed, with respect to the plate-shaped test specimen after heating. Further, of the section vertical to the surface of 40 mm by 100 mm, a near-surface portion (vicinity of the surface of 40 mm by 100 mm) of the plate-shaped test specimen was observed with a scanning electron microscope (Scanning Electron Microscope: SEM). The observation conditions of SEM were a magnification of 40 times and a visual field area of 2000 µm × 2000 µm. Presence or absence of breakaway oxidation was visually confirmed. When breakaway oxidation was present on the surface of 40 mm by 100 mm, and/or a section perpendicular to the surface of 40 mm by 100 mm of the plate-shaped test specimen in visual evaluation, it was evaluated as a failure (shown by "failure" in "oxidation confirmation test" "success or failure" column in Table 1). When there is no breakaway oxidation, it was determined as a success (shown by "success" in the column "oxidation confirmation test" "success or failure" column in Table 1).

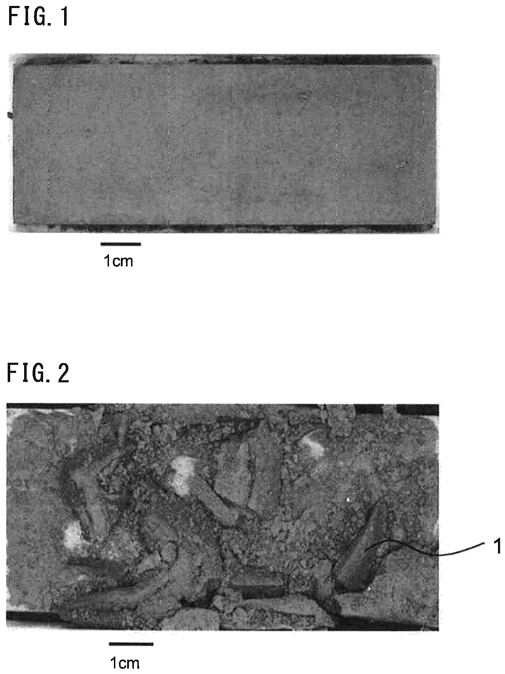

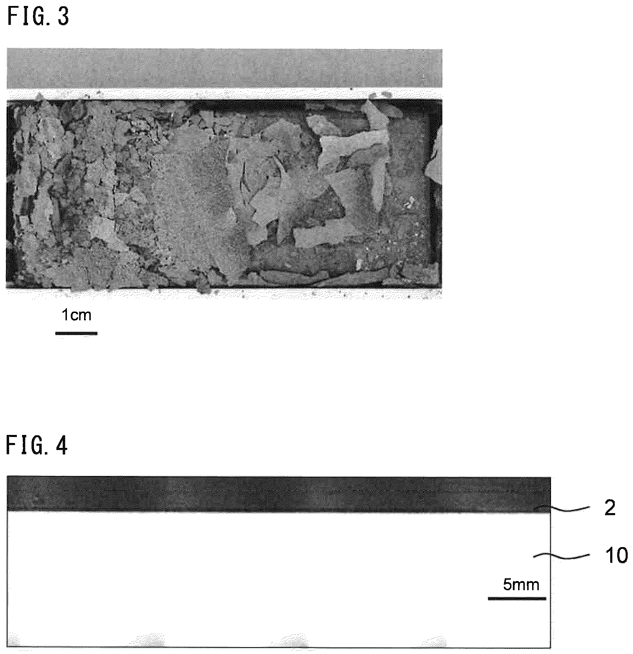

FIG. 1 is a plan view of a plate-shaped test specimen of test number 1-1. FIG. 2 is a plan view of a plate-shaped test specimen of test number 1-2. FIG. 3 is a plan view of a plate-shaped test specimen of test number 1-3. When a region having breakaway oxidation was clearly observed (for example, reference sign 1 in FIG. 2, and the entire surface in FIG. 3), in upper surfaces of 40 mm by 100 mm of the plate-shaped test specimens, it was determined that breakaway oxidation occurred. On the other hand, when breakaway oxidation was not observed in the surface of 40 mmm by 100 mm of the test specimen, as in FIG. 1, it was determined that breakaway oxidation did not occur.

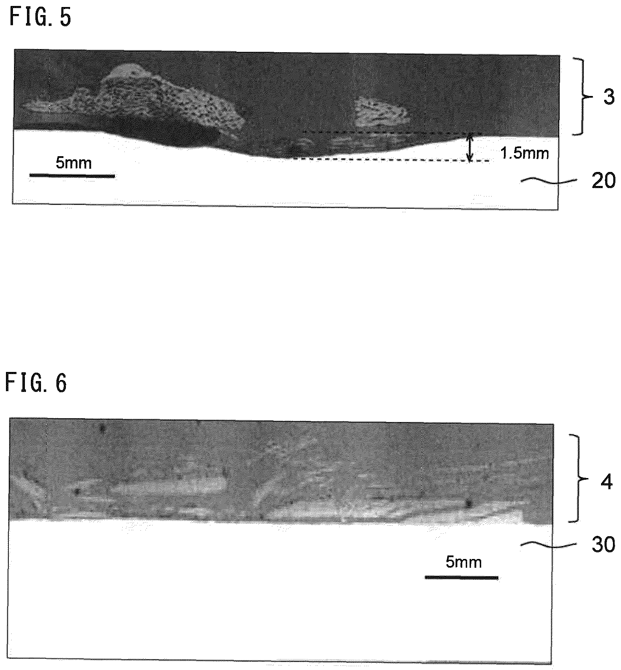

Further, by SEM observation of the section perpendicular to the surface of 40 mm by 100 mm, an effect on a base metal was also investigated. FIG. 4 is a sectional observation view by SEM of test number 1-1. FIG. 5 is a sectional observation view by SEM of test number 1-2. FIG. 6 is a sectional observation view by SEM of test number 1-3. When breakaway oxidation was not observed as in FIG. 4, it was determined that breakaway oxidation did not occur. On the other hand, when a region having breakaway oxidation was clearly observed in a section perpendicular to the surface of 40 mm by 100 mm (for example, when the state in which scales like reference sign 3 in FIG. 5 and reference sign 4 in FIG. 6 were generated and the thickness of the base metal was reduced was observed), it was determined that breakaway oxidation occurred.

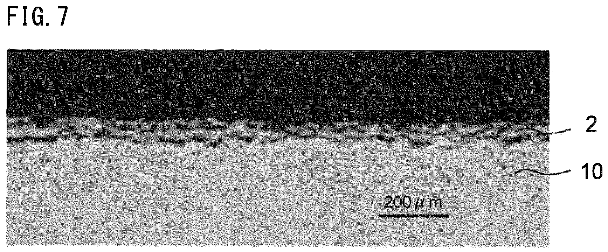

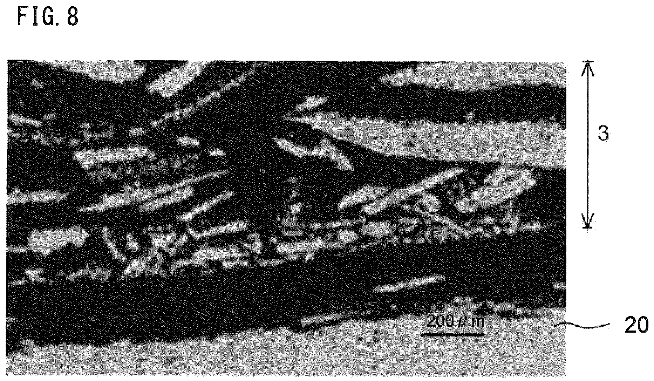

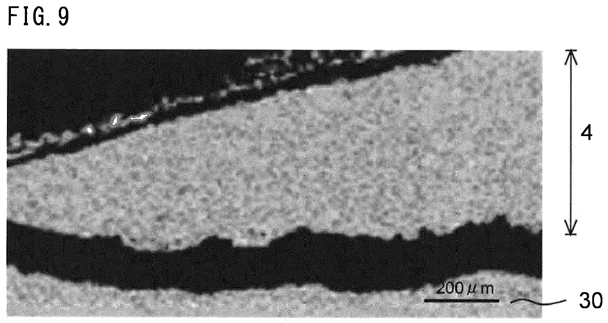

Further, element analysis by element mapping was carried out with respect to the section perpendicular to the surface of 40 mm by 100 mm of the plate-shaped test specimen by using an electron probe micro analyzer (Electron Probe Micro Analyzer: EPMA). A scale state was analyzed by the element analysis. The result is shown in FIG. 7 to FIG. 9. FIG. 7 is a view showing an element mapping analysis result of test number 1-1. FIG. 8 is a view showing an element mapping analysis result of test number 1-2. FIG. 9 is a view showing an element mapping analysis result of test number 1-3.

### [Test Result]

Referring to Table 1, in test number 1-1, the compositions of the compounds were appropriate, and therefore, the softening point of the antioxidant agent for heating an alloy material was 800°C or more. Therefore, referring to FIG. 1 and FIG. 7, a Cr₂O₃ coating 2 with uniform thickness was formed on the surface of the plate-shaped test specimen, and normal oxidation was observed. Furthermore, referring to FIG. 4, in test number 1-1, there was no thickness reduction of a base metal 10. In other words, by using the antioxidant agent for heating an alloy material of test number 1-1, oxidation resistance of the alloy material was improved.

In test number 1-4, the composition of the compounds were also appropriate, and therefore, the softening point of the antioxidant agent for heating an alloy material was 800°C or more. As a result, a Cr₂O₃ coating with uniform thickness was formed on the surface of the plate-shaped test specimen, and normal oxidation was observed. Further, in test number 1-4, there was no thickness reduction of the base metal. In other words, by using the antioxidant agent for heating an alloy material of test number 1-4, oxidation resistance of the alloy material was improved.

On the other hand, in test number 1-2, the softening point of the antioxidant agent for heating an alloy material was less than 800°C. Since the softening point was less than 800°C, it is conceivable that the compositions of the compounds were not appropriate, either, in test number 1-2. Therefore, referring to FIG. 2, breakaway oxidation 1 occurred. Referring to FIG. 5, further in test number 1-2, a recess with a depth of approximately 1.5 mm was produced in a base metal 20. Referring to FIG. 8, further in test number 1-2, a scale 3 mainly containing Fe was formed. By using the antioxidant agent for heating an alloy material of test number 1-2, oxidation resistance of the alloy material was not improved.

In test number 1-3, the antioxidant agent for heating an alloy material was not used. Therefore, referring to FIG. 3, the entire surface of the plate-shaped test specimen was severely oxidized. Further, in test number 1-3, referring to FIG. 6, an entire surface of a base metal 30 was reduced in thickness by approximately 0.8 mm, and a scale 4 was formed. Further in test number 1-3, referring to FIG. 9, the scale 4 mainly containing Fe and Cr was formed.

### [Oxidation Weight Reduction Measurement Test]

The antioxidant agents for heating an alloy material shown in Table 2 were prepared. Test numbers 2-2 to 2-4 had the compositions described in Table 2. In test number 2-2, a total amount of the respective components described in Table 2 was 100% by mass. In each of test number 2-3 and test number 2-4, a total amount of the respective components described in Table 2 was less than 100% by mass, and the balance was impurities. The composition of each of the antioxidant agents for heating an alloy material was obtained by producing the antioxidant agent for heating an alloy material, thereafter, drying the antioxidant agent for heating an alloy material, and performing ICP analysis. Specifically, the contents of the respective components were obtained by converting the contents of Si, Al, Mg, Na, K, Ca and B obtained by ICP into the contents of SiO₂, Al₂O₃, MgO, Na₂O, K₂O, CaO and B₂O₃ respectively.

### [Table 2]

**TABLE 2**

| Test number | Composition of antioxidant agent for heating high alloy material (in mass%, balance is impurities) | | | | | | Na₂O, K₂O, CaO Total content (mass%) | Oxidation weight reduction (g/mm²) |
|---|---|---|---|---|---|---|---|---|
| | SiO₂ | Al₂O₃ | MgO | Na₂O | K₂O | CaO | | |
| 2-1 | No coating of antioxidant agent | | | | | | | 0.264 |
| 2-2 | 53.9 | 13.0 | 0.2 | 1.5 | 10.50 | 20.9 | 32.90 | 0.137 |
| 2-3 | 65.4 | 22.6 | 2.6 | 6.7 | 1.10 | 0.9 | 8.70 | 0.205 |
| 2-4 | 54.7 | 13.3 | 0.2 | 10.3 | 0.02 | 21.4 | 31.72 | 0.248 |

A plate-shaped test specimen simulating an alloy material was prepared. The plate-shaped test specimen was a stainless steel material containing, in mass%, 87% Fe, and 13% Cr. The size of the plate-shaped test specimen was 10 mm thick, 20 mm long and 20 mm wide. The mass (g) of the plate-shaped test specimen before coating a slurry was measured, and determined as a pre-test mass (g).

The slurries were each produced by mixing 6 parts by mass potter's clay, 5 parts by mass bentonite, and 70 to 100 parts by mass water to 100 parts by mass the antioxidant agent for heating an alloy material. The obtained slurries were each coated on the entire surface (an upper surface, a lower surface, and four side surfaces) of the plate-shaped test specimen by using a brush, and thereafter, dried.

The heating step was simulated, and the plate-shaped test specimens were heated at 1200°C for two hours. The atmosphere simulated LNG combustion. Specifically, the atmospheric gas was adjusted so that the composition of the atmospheric gas was 2 to 3% of O₂, 8 to 10% of CO₂, 15 to 20% of H₂O, and the balance being N₂. Scales adhering to the plate-shaped test specimen by heating were removed by being dipped into an alkaline aqueous solution, and thereafter, being dipped into a citric acid aqueous solution. The mass (g) of the plate-shaped test specimen after scale removal was measured, and was determined as a post-test mass (g).

A value obtained by dividing a difference between the mass (g) of the plate-shaped test specimen before heating and the mass (g) of the plate-shaped test specimen after heating by a surface area (1200 mm²) of the surface (the upper surface, and the four side surfaces) of the plate-shaped test specimen was determined as an oxidation weight reduction. What had an oxidation weight reduction of 0.200 g/mm² or less was determined to be excellent in oxidation resistance.

### [Test Result]

Test number 2-2 had appropriate compositions of compounds, and therefore has the softening point of the antioxidant agent for heating an alloy material of 800°C or more. As a result, the antioxidant agent for heating an alloy material of test number 2-2 has an oxidation weight reduction of 0.200 g/mm² or less, and was excellent in oxidation resistance.

On the other hand, in test number 2-1, an antioxidant agent for heating an alloy material was not used. Therefore, the oxidation weight reduction was higher than 0.200 g/mm², and oxidation resistance was inferior.

In test number 2-3, the total content of Na₂O, K₂O and CaO was low. Therefore, the softening point was less than 800°C. Accordingly, flowability of the antioxidant agent for heating an alloy material was low. As a result, the oxidation weight reduction was higher than 0.200 g/mm², and the oxidation resistance was inferior.

In test number 2-4, the content of Na₂O was high. Therefore, the Cr₂O₃ coating that is the protection coating was melted. As a result, the oxidation weigh reduction was higher than 0.200 g/mm², and the oxidation resistance was inferior.

### [Blocking Resistance Evaluation Test]

The antioxidant agents for heating an alloy material shown in Table 3 was prepared. Test numbers 3-1 to 3-5 have the compositions described in Table 3. In test number 3-3, a total amount of the respective components described in Table 3 was 100% by mass. In test numbers 3-1, 3-2, 3-4 and 3-5, the total amounts of the respective components described in Table 3 were less than 100% by mass, and the balances were impurities. The composition of each of the antioxidant agents for heating an alloy material was obtained by producing and thereafter drying the antioxidant agent for heating an alloy material, and performing ICP analysis. Specifically, the contents of the respective components were obtained by converting the contents of Si, Al, Mg, Na, K, Ca and B that were obtained by ICP into the contents of SiO₂, Al₂O₃, MgO, Na₂O, K₂O, CaO and B₂O₃. Test number 3-1 is the same as test number 1-1. Test number 3-2 is the same as test number 1-4. Test number 3-3 is the same as test number 2-2.

### [Table 3]

**TABLE 3**

| Test number | Composition of antioxidant agent for heating alloy material (in mass%, balance is impurities) | | | | | | | Na₂O, K₂O, CaO Total content (mass%) | F1 | Adhesive force (kg) |
|---|---|---|---|---|---|---|---|---|---|---|
| | SiO₂ | Al₂O₃ | MgO | B₂O₃ | Na₂O | K₂O | CaO | | | |
| 3-1 | 56.8 | 11.5 | 0.2 | 0.0 | 0.2 | 18.20 | 13.0 | 31.40 | 2.37 | 0.72 |
| 3-2 | 60.1 | 14.6 | 0.2 | 0.0 | 1.5 | 0.02 | 23.5 | 25.02 | 2.41 | 2.54 |
| 3-3 | 53.9 | 13.0 | 0.2 | 0.0 | 1.5 | 10.50 | 20.9 | 32.90 | 1.84 | 1.42 |
| 3-4 | 62.7 | 21.7 | 2.5 | 0.0 | 6.4 | 1.06 | 5.0 | 12.48 | 2.93 | 2.84 |
| 3-5 | 59.0 | 14.3 | 0.3 | 0.0 | 1.6 | 1.94 | 22.8 | 26.34 | 2.28 | 1.55 |

The plate-shaped test specimen simulating an alloy material was prepared. As the plate-shaped test specimen, a duplex stainless steel material corresponding to A240 UNS S39274 specified by ASTM was used. The size of the plate-shaped test specimen was 4 mm thick, 25 mm long and 80 mm wide. The slurries were each produced by mixing 6 parts by mass potter's clay, 5 parts by mass bentonite, and 70 to 100 parts by mass water to 100 parts by mass the antioxidant agent for heating an alloy material. The obtained slurries were each coated on a surface of 25 mm by 20 mm at the end portion, of the surface of 25 mm by 80 mm that was the upper surface of the plate-shaped test specimen by using a brush, and thereafter dried. The two plate-shaped test specimens were overlaid on each other so that the slurry coated surfaces contact each other on the entire surfaces.

The plate-shaped test specimens after coated with the antioxidant agents for heating an alloy material were heated at 1300°C for 2 hours. The atmosphere was under the air atmosphere.

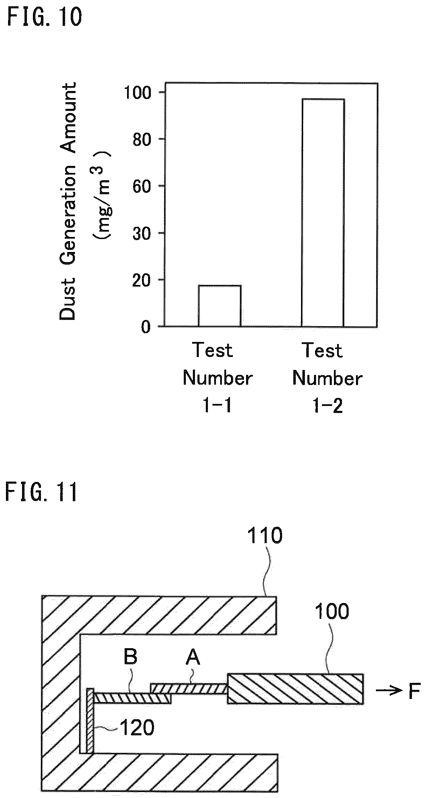

Whether or not the two plate-shaped test specimens after heating adhered to each other was evaluated. FIG. 11 is a schematic view of a device for evaluating blocking resistance. Whether or not the two plate-shaped test specimens adhered to each other was evaluated by using the device shown in FIG. 11. Specifically, referring to FIG. 11, a metal bar 100 was fixed by welding to an end portion of one plate-shaped test specimen A of the two plate-shaped test specimens. The plate-shaped test specimen A to which the metal bar 100 was welded and the other plate-shaped test specimen B were overlaid on each other so that slurry coated surfaces contact each other on the entire surfaces. The plate-shaped test specimen B was fixed into a tube furnace 110 via a fixture 120. The metal bar 100 was pulled out in a horizontal direction, and an adhesive force F (kg) when peeling out the two plate-shaped test specimens in a horizontal direction with respect to the surface of 25 mm by 80 mm was measured. In measurement of the adhesive force, the Digital suspension scale TDTB-25 made by TRUSCO Nakayama Corporation was used. The test specimen heating temperature during measurement was 1300°C, the measurement environment was an air atmosphere, and a tensile speed was 10 to 20 cm/second. The result is shown in column "adhesive force (kg)" in Table 3.

### [Test Result]

Referring to Table 3, the antioxidant agents for heating an alloy material of test numbers 3-1 to 3-3 and 3-5 had suitable contents of the respective components, and satisfied Formula (1). Therefore, the adhesive forces when peeling out the two plate-shaped test specimens were 2.60 kg or less. The antioxidant agents for heating an alloy material of test numbers 3-1 to 3-3 and 3-5 were excellent in blocking resistance.

On the other hand, the antioxidant agents for heating an alloy material of test number 3-4 had appropriate contents of the respective components, but did not satisfy Formula (1). Therefore, the adhesive force when peeling out the two plate-shaped test specimens was 2.84 kg. The antioxidant agent for heating an alloy material of test number 3-4 was not excellent in blocking resistance.

### [Example 2]

### [Dust Proof Evaluation Test]

The antioxidant agents for heating an alloy material of test number 1-1 in Table 1 and test number 1-2 in Table 1 were prepared. As the test specimen, a steel material of JIS SUS312L was prepared.

The slurry of the antioxidant agent for heating an alloy material of test number 1-1 in Table 1 was coated on the steel material. The slurry of the antioxidant agent for heating an alloy material was produced by mixing 6 parts by mass potter's clay, 5 parts by mass bentonite, and 70 to 100 parts by mass water with respect to 100 parts by mass the antioxidant agent for heating an alloy material. The obtained slurry was coated on the surface (the upper surface, the lower surface, and the four side surfaces) of the steel material, and thereafter was dried, and hold treatment was performed. The hold treatment was carried out at 1270°C for 50 hours. During hold treatment, exhaust gas was recovered from a stack of the soaking pit every one hour. The recovered exhaust gas amount was measured by the exhaust gas measurement device. Further, white solid matter in the recovered exhaust gas was taken as soot and dust, and weight measurement was performed. The weight of soot and dust (white solid matter) per volume of exhaust gas was calculated as a dust generation amount (mg/m³). The above described test was performed 50 times in total every one hour during hold treatment, and the maximum value of the obtained dust generation amounts (mg/m³) was determined as the dust generation amount (mg/m³) of test number 1-1. The dust proof evaluation test was performed with respect to the antioxidant agent for heating an alloy material of test number 1-2 in Table 1 by the same method as the antioxidant agent for heating an alloy material of test number 1-1 in Table 1. As for the antioxidant agent for heating of test number 1-2, the slurry produced in the same ratio as the ratio of test number 1-1 was coated on the surface (the upper surface, lower surface, and four side surfaces) of the steel material. The hold treatment was carried out similarly to test number 1-1, with respect to the steel material coated with the antioxidant agent for heating an alloy material of test number 1-2. The dust generation amount during hold treatment was obtained similarly to the case in which the antioxidant agent for heating an alloy material of test number 1-1 was used, with respect to the antioxidant agent for heating an alloy material of test number 1-2. The result is shown in FIG. 10.

The antioxidant agent for heating an alloy material of test number 1-1 had a remarkably smaller dust generation amount than the antioxidant agent for heating an alloy material of test number 1-2, and was excellent in dust proof.

The embodiment of the present invention is described thus far. However, the aforementioned embodiment is only an illustration for carrying out the present invention. Accordingly, the present invention is not limited to the aforementioned embodiment, and can be carried out by properly changing the aforementioned embodiment within the range of the appended claims.

### REFERENCE SIGNS LIST

- 1: Breakaway oxidation
- 2: Cr₂O₃ coating
- 3: Scale mainly containing Fe
- 4: Scale mainly containing Fe and Cr
- 10: Base metal
- 20: Base metal
- 30: Base metal

## Claims

1. An antioxidant agent for heating an alloy material, consisting of,
in mass%, when converted into oxides,
SiO₂: 40.0 to 80.0%,
Al₂O₃: 0 to 30.0%,
MgO: 0 to 5.0%,
10.00 to 50.00% in total of one kind or more selected from a group consisting of Na₂O: 9.0% or less, K₂O: 20.00% or less, and CaO: 25.0% or less,
B₂O₃: 0 to less than 0.5%, and
the balance being impurities, and satisfying Formula (1):
(2SiO₂ + Al₂O₃) / (0.1MgO + 0.2B₂O₃ + 6Na₂O + 1.4K₂O + 2CaO) ≤ 2.50 (1)
where a content in mass% of a corresponding component is substituted for each chemical formula in Formula (1).

2. A heating method for an alloy material, comprising the steps of:
coating a surface of an alloy material with the antioxidant agent for heating an alloy material according to claim 1; and
heating the alloy material coated with the antioxidant agent for heating an alloy material.

3. The heating method for an alloy material according to claim 2,
wherein a chemical composition of the alloy material contains Cr: 12 to 50% by mass.

4. The heating method for an alloy material according to claim 3,
wherein a chemical composition of the alloy material contains Mo: 1 to 15% by mass.

5. The heating method for an alloy material according to any one of claims 2 to 4, wherein,
in the heating, the alloy material coated with the antioxidant agent for heating an alloy material is heated at a temperature of 1000 to 1350°C for 15 to 50 hours.

## Patentansprüche

1. Antioxidationsmittel zum Erwärmen eines Legierungsmaterials, bestehend aus,
in Masse-%, umgerechnet in Oxide,
SiO₂: 40,0 bis 80,0%,
Al₂O₃: 0 bis 30,0%,
MgO: 0 bis 5,0%,
insgesamt 10,00 bis 50,00% einer oder mehrerer Verbindungen, ausgewählt aus einer Gruppe bestehend aus Na₂O: 9,0% oder weniger, K₂O: 20,00% oder weniger und CaO: 25,0% oder weniger,
B₂O₃: 0 bis weniger als 0,5%, und
wobei der Rest Verunreinigungen sind, und die Formel (1) erfüllt ist:
(2SiO₂ + Al₂O₃) / (0,1MgO + 0,2B₂O₃ + 6Na₂O + 1,4K₂O + 2CaO) ≤ 2,50 (1)
wobei ein Gehalt in Masse-% einer entsprechenden Komponente in Formel (1) für jede chemische Formel eingesetzt wird.

2. Verfahren zum Erwärmen eines Legierungsmaterials, umfassend die folgenden Schritte:
Beschichten einer Oberfläche eines Legierungsmaterials mit dem Antioxidationsmittel zum Erwärmen eines Legierungsmaterials gemäß Anspruch 1; und
Erwärmen des mit dem Antioxidationsmittel zum Erwärmen eines Legierungsmaterials beschichteten Legierungsmaterials.

3. Verfahren zum Erwärmen eines Legierungsmaterials gemäß Anspruch 2,
wobei eine chemische Zusammensetzung des Legierungsmaterials Cr: 12 bis 50% nach Masse enthält.

4. Verfahren zum Erwärmen eines Legierungsmaterials gemäß Anspruch 3,
wobei eine chemische Zusammensetzung des Legierungsmaterials Mo: 1 bis 15% nach Masse enthält.

5. Verfahren zum Erwärmen eines Legierungsmaterials gemäß einem der Ansprüche 2 bis 4, wobei
bei der Erwärmung das mit dem Antioxidationsmittel zum Erwärmen eines Legierungsmaterials beschichtete Legierungsmaterial 15 bis 50 Stunden lang auf eine Temperatur von 1000 bis 1350°C erwärmt wird.

## Revendications

1. Agent antioxydant pour le chauffage d'un matériau en alliage, consistant, en % en masse lors d'une conversion en oxydes, en :
SiO₂ : 40,0 à 80,0 %,
Al₂O₃ : 0 à 30,0 %,
MgO : 0 à 5,0 %,
10,00 à 50,00 % au total d'un ou plusieurs types choisis dans le groupe constitué par Na₂O : 9,0 % ou moins, K₂O : 20,00 % ou moins, et CaO : 25,0 % ou moins,
B₂O₃ : 0 à moins de 0,5 %, et
le reste étant des impuretés,
et satisfaisant à la formule (1) :
(2SiO₂ + Al₂O₃) / (0,1MgO + 0,2B₂O₃ + 6Na₂O + 1,4K₂O + 2CaO) ≤ 2,50 (1)
où la teneur en % en masse en un composant correspondant est substituée pour chaque formule chimique dans la formule (1).

2. Procédé de chauffage d'un matériau en alliage, comprenant les étapes de :
revêtement d'une surface d'un alliage en métal avec l'agent antioxydant pour le chauffage d'un matériau en alliage de la revendication 1 ; et
chauffage du matériau en alliage revêtu de l'agent antioxydant pour le chauffage d'un matériau en alliage.

3. Procédé de chauffage d'un matériau en alliage selon la revendication 2,
dans lequel la composition chimique du matériau en alliage contient Cr : 12 à 50 % en masse.

4. Procédé de chauffage d'un matériau en alliage selon la revendication 3,
dans lequel la composition chimique du matériau en alliage contient Mo : 1 à 15 % en masse.

5. Procédé de chauffage d'un matériau en alliage selon l'une quelconque des revendications 2 à 4, dans lequel,
dans le chauffage, le matériau en alliage revêtu de l'agent antioxydant pour le chauffage d'un matériau en alliage est chauffé à une température de 1000 à 1350°C pendant 15 à 50 heures.
